# EUROPEAN PATENT SPECIFICATION

(11) **EP 2 717 709 B1**
(45) Date of publication and mention of the grant of the patent: **01.04.2015**
(21) Application number: 12727289.6
(22) Date of filing: 16.05.2012
(51) Int. Cl.: A23G 1/18

(54) **METHOD FOR THE CLEANING OF A CHOCOLATE TEMPERING MACHINE AND CHOCOLATE TEMPERING MACHINE THAT IMPLEMENTS THIS METHOD**
VERFAHREN ZUR REINIGUNG EINER SCHOKOLADETEMPERIERMASCHINE UND SCHOKOLADETEMPERIERMASCHINE ZUR UMSETZUNG DES VERFAHRENS
PROCÉDÉ POUR LE NETTOYAGE D'UNE MACHINE DE TEMPÉRAGE DE CHOCOLAT ET MACHINE DE TEMPÉRAGE DE CHOCOLAT QUI MET EN UVRE CE PROCÉDÉ

(30) Priority: 09.06.2011 IT MI20111039
(43) Date of publication of application: 16.04.2014
(73) Proprietor: G.S.G. S.r.l., 36075 Montecchio Maggiore - Vicenza (IT)
(72) Inventor: BRAVO, Genesio, I-36050 Sovizzo-Vicenza (IT)
(74) Representative: Martegani, Franco
(86) International application number: PCT/EP2012/002166
(87) International publication number: WO 2012/167873

(56) References cited:
- GB-A- 741 412
- GB-A- 2 338 674

## Description

The present invention relates to a method for the cleaning of a chocolate tempering machine and a chocolate tempering machine that implements this method.

Chocolate tempering machines are known in the art, which normally comprise a tank in which the chocolate being processed is contained, connected by means of an outflow tube to a pump, normally of the worm-conveyor type, in turn connected to a fountain tube terminating in a distribution spout above the tank.

During this type of processing, the chocolate is first melted in the tank (at a temperature ranging from 40°C to 55°C), then rapidly cooled in the worm-conveyor pump (at a temperature varying in relation to the type of chocolate being processed) and finally maintained at a preselected temperature (so-called crystallization temperature) for an indefinite time: the chocolate leaving the distribution spout, if not used, is sent by natural falling into the underlying tank to be readmitted into circulation.

If, on the other hand, the chocolate is removed from the spout and left to solidify, a perfectly glossy product is obtained, having a uniform colour and organoleptically perfect, thanks to the formation of crystal particulates of cocoa butter (integral part of the chocolate mixture).

This production method, however, and consequently the tempering machines used in the known art, have various drawbacks associated with the switch-off phase (and cleaning) of the machine or change of chocolate type.

When the machine is to be switched off at the end of the operation and the product extracted, there are various difficulties deriving from the particular assembly: for safety reasons, in fact, it is advisable for some of the parts of the machine (for example the worm-conveyor) to be difficult to have access to.

The mass of chocolate remaining inside the machine however tends to return to its natural solid state making a subsequent restart of the operations impossible unless heating means are envisaged (electric resistances), suitably positioned in correspondence with the various organs of the machine and which melt the chocolate before restarting the machine after a long stoppage.

These heaters must therefore be installed in current tempering machines and the restarting phase creates an additional time consumption.

Furthermore, once a certain type of chocolate (dark, milk, white, etc.) has been introduced into a tempering machine, it is extremely difficult to change it (above all when dark chocolate must be changed to white chocolate).

The reason for this is that even if the machine is completely emptied, the chocolate adheres to the internal walls of the various organs (for example the pump) and it is impossible to completely remove it unless the worm-screw of the worm-conveyor of the pump is completely extracted and cleaned separately, with the same drawbacks (linked to the difficult accessibility) mentioned above.

Also considering the fact that in these machines, it is impossible to use water for the cleaning as residues of humidity in the chocolate cause a rise in the bacterial charge and a rapid deterioration in the chocolate itself.

The system normally used for substituting the type of chocolate is therefore inserting new chocolate, of the desired type, recirculating it in the :machine and continuing to extract until the chocolate becomes perfectly pure.

This process implies a considerable waste of raw material (chocolate) as it is impure and cannot therefore be used for any application.

In order to avoid this waste, users who adopt these chocolate mixers, normally purchase three machines, each specifically for operating with a different type of chocolate (dark, milk and white) with consequently significant economical investments.

The same problem arises, however, if the product brand is to be changed in one of these machines or if the percentage of cocoa contained in the chocolate is to be changed: the new product introduced into the machine is in fact mixed with the product that has remain entrapped in its interior, thus producing a non-pure product that must therefore be disposed of.

A method normally used for at least partially overcoming this drawback and thus obtaining a washing of the tempering machines is to use melted cocoa butter (from 40°C up) which is introduced into the machine and circulated therein, as if it were chocolate.

For this purpose, it would be useful to briefly mention the physico-chemical and organoleptic structure of chocolate: it is a mixture of various ingredients which, when amalgamated, produce a particular type of product.

In every type of chocolate (regardless of whether it be dark, milk or white), there is always cocoa butter, which represents the fatty part of chocolate and which defines its physical properties.

Cocoa butter has the particular characteristic of combining with cocoa (or powdered milk depending on the type of chocolate to be produced) allowing the dilution of the latter.

Cocoa butter has an extremely variable density depending on the temperature: at temperatures higher than 40°C, in fact, it behaves like an oil; it can also be heated to over 100°C without degenerating or burning (the smoke point is in fact around 200°C).

As far as cleaning with cocoa butter is concerned, there are however various drawbacks: melted cocoa butter in fact is not able to reach all the points of the machine (such as the entire worm-conveyor and the distribution spout) as the structural characteristics of the machine (and specifically the mechanical tolerances of the worm-screw of the worm-conveyor with its containment tube) do not allow the melted butter to reascend.

This means that the upper part of the worm conveyor and:the whole of the distribution spout are not cleaned by the cocoa butter and remain covered by a layer of old chocolate, with the same problems described above.

Furthermore, as the worm conveyor is positioned vertically, the cleaning height that can be reached in this operation is linked to the quantity of cocoa butter used: due to the principle of communicating vases, the cocoa butter does in fact rise along the worm screw up to a height equal to the surface of the mass of butter in the container.

This implies the use of a high quantity of cocoa butter which can only be used for one cleaning cycle, with the undesirable consequence of having high costs (substantially equal to the cost of a charge of chocolate), correlated to an incomplete cleaning of the machine (part of the chocolate in fact remains imprisoned in the upper areas of the worm-conveyor and in the spout, which are not reached by the melted cocoa butter.

An objective of the present invention is to provide a method for the cleaning of a chocolate tempering machine which is capable of overcoming these drawbacks.

A further objective of the present invention is to provide a chocolate tempering machine which implements this method.

This objective is achieved by a method according to claim 1.

Further advantageous characteristics of the present invention are contained in the enclosed subclaims which are an integral part of the present description.

The structural and functional characteristics of the invention and its advantages with respect to the known art will appear more evident from the following description, referring to the sole enclosed drawing which shows a possible practical embodiment of the invention itself, and in particular a scheme of a chocolate tempering machine.

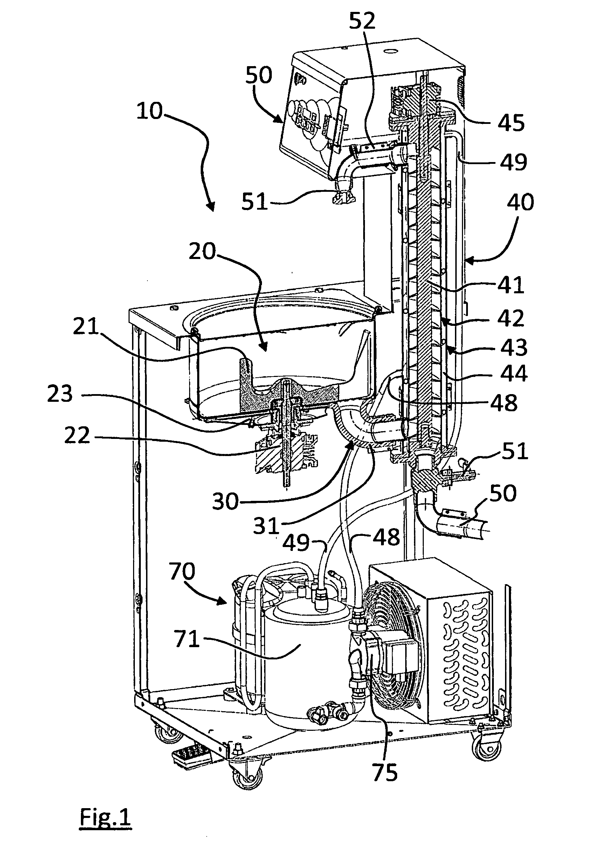

For a complete understanding of the invention, it would be convenient to first describe the tempering machine 10 of figure 1, and then the method according to the present invention.

The machine 10 comprises a tank 20 of conductive metallic material in which mixing blades 21 activated by an electric motor 22 are housed.

The tank 20 is equipped externally with heating systems 23, like those described for example in patent US 4,935,602 in the name of the same applicant.

It should be noted that the heating systems 23 can obviously be different, for example traditional heating resistances, heating fluid coils or other similar products.

The tank 20 is in fluid connection with an outflow tube 30, made of a conductive metallic material and also equipped with heating systems 31, analogous to those 23 of the tank 20, of which no further mention will be made.

The outflow tube 30 terminates on one side on the bottom of the tank 20 and on the other at the base of the worm-conveyor pump, indicated as a whole with the reference number 40.

The worm-conveyor pump 40 comprises a worm-screw 41 housed in a chamber defined by a first internal cylindrical casing 42, made of conductive metallic material.

A second outer cylindrical casing 43, having larger dimensions, is situated around the internal cylindrical casing 42, thus creating a double concentric tube equipped with an interspace 44 (situated between the casings 42 and 43) in which a thermovector fluid is circulated.

The worm-screw 41 is substantially positioned vertically and is actuated by an electric motor 45 situated in this example at the head of the screw, on the upper part of the worm-conveyor 40; the motor 45 can obviously also be situated at the base, on the lower part of the worm-conveyor 40, without substantially changing the characteristics of the machine.

The interspace 44, in this example, is connected to a thermovector fluid tank 71 situated at the base of the machine 10 and part of a thermoregulation circuit 70 of the temperature of the thermovector fluid, which will be discussed in more detail further on.

The fluid connection between the interspace 44 and thermoregulation circuit 70 is guaranteed by two tubings 48 and 49 which terminate in the interspace 44 at a lower and upper height respectively.

The upper part of the worm-conveyor 40 is connected to a distribution head 50 which comprises a distribution spout 51 and heating means of the spout 52, analogous to the means 23 and 31 described above.

The distribution spout 51 is facing downwards and is positioned vertically with respect to the tank 20, so that a liquid exiting from it falls by gravity into the same tank, if not intercepted, thus allowing an operator to remove the chocolate during functioning.

With respect to the thermoregulation circuit 70 of the thermovector fluid, this comprises a heating circuit and a cooling circuit, for heating or cooling the thermovector fluid itself: the two circuits are known *per sé* and consequently no further mention will be made of them, except that the thermovector fluid is accumulated in the tank 71 and circulated in the interspace 44 by means of a pump 75.

As a possible alternative, it is possible to have a cooling coil in direct contact with the worm-conveyor pump 40.

At the base of the latter, in communication with the chamber that houses the worm-screw 41, there is a drainpipe 50 intercepted by a tap 51, which allows the discharge of any liquid material contained in the worm-conveyor 40.

The functioning of the machine 10 during a normal operative phase is described above for machines known in the art and which will be briefly summarized: the chocolate is heated to temperatures in the order of 40°C-55°C in the tank 20, sent to the worm-conveyor 40 through the tube 30, where it is rapidly cooled to crystallization temperature (depending on the type of chocolate being processed) and sent to the distribution spout 51 from which it falls into the tank 20 to return to the cycle.

When the whole mass of circulating chocolate has reached the crystallization temperature, the heating means 23, 31 and 52 are regulated to maintain this temperature for a desired period of time.

The machine 10 described above is structurally analogous to machines with a worm-conveyor pump known in the art and currently on the market. The construction variations of these machines are in fact simply limited to the heating means (which can consist of resistances or thermovector means) and cooling means (which can be: copper coils applied directly to the tube of the worm-conveyor pump, or thermovector means).

The main difference with respect to the known machines lies in the fact that the machine 10 implements the cleaning method according to the invention, which is described hereunder.

In general, the method according to the present invention comprises two distinct operative phases and uses an extremely reduced mass of cocoa butter to effect the cleaning of the machine 10 and more specifically the worm-conveyor 40 and spout 51 which would otherwise be difficult to clean in any other way.

A first phase a) comprises injecting a mass of cocoa butter into the worm-conveyor 40 at a temperature higher than about 40°C and cooling it in the worm-conveyor to a temperature lower than about 21°C keeping the worm-conveyor in constant functioning.

A second phase b) comprises stopping the worm-conveyor 40 and heating the mass of cocoa butter contained therein to a temperature higher than 40°C, subsequently discharging it outside.

More specifically, phase a) of the method comprises the following steps:
a1) Melting said cocoa butter in said tank 20;
a2) Sending said cocoa butter into said worm-conveyor 40;
a3) Maintaining said internal cylindrical casing 42 of the worm-conveyor 40 at a temperature lower than 21°C and activating said worm-screw 41 of the worm-conveyor with the consequent progressive cooling of the mass of cocoa butter which is transiting in said worm-conveyor 40;
a4) Contemporaneously maintaining said spout 51 at a temperature ranging from 35°C to 60°C.

Phase b) of the method, on the other hand, comprises the following steps:
b1) Interrupting the movement of the worm screw 41 of the worm-conveyor 40;
b2) Heating the internal cylindrical casing 42 of the worm-conveyor 40 to a temperature equal to about 50°C and/or until a temperature higher than 40°C of said mass of cocoa butter contained in said worm-conveyor 40, is reached;
b3) Removal of the mass of cocoa butter from the tank 20 and/or drainpipe 50.

It should be pointed out that the cooling to which the cocoa butter is subjected in the worm-conveyer 40, brings the latter to crystallization temperature, thus making it denser.

In this way, the rotational movement of the worm-screw 41 lifts the cocoa butter allowing it to overcome constructive tolerances and clearances: the entire worm-screw 41 is therefore completely covered with semisolid cocoa butter which subsequently flows out of the hot spout 51, which is thus cleaned.

When the cocoa butter must be discharged to interrupt the cleaning, the worm-conveyor is heated to allow the cocoa butter to reach its melting temperature: it therefore becomes liquefied and returns (thanks to the force of gravity) to the containment tank, carrying all the residual chocolate with it.

A further cleaning phase can be optionally effected, which consists in activating all the heating means 23,31,52 to remove the residues of cocoa butter on the internal metallic surfaces.

Once the two phases a) and b) have been effected, there is advantageously no risk of burning chocolate residues (ruining the new product to be inserted), as these have been eliminated by the action of the cocoa butter, whose residues, however, contrary to those of chocolate, resist high temperatures without burning.

Some characteristics for perfecting the method discussed so far are also envisaged.

In particular, step a1) described above is effected bringing the cocoa butter to a temperature ranging from 35°C to 60°C, preferably from 45°C to 50°C.

Furthermore, said quantity of the mass of cocoa butter is preferably and advantageously equal to the double of the volume of air present in the internal cylindrical casing 42, net of the volume of the worm-conveyor 40. In this way, an extremely limited quantity of cocoa butter must be used, thus making the process advantageous from an economic point of view.

The maintenance temperature of the internal cylindrical casing 42 of the worm-conveyor 40 according to step a3) preferably, is substantially equal to or lower than 19°C.

The maintenance temperature of the spout 51 according to step a4) preferably ranges from 40°C to 55°C.

The objectives indicated in the preamble of the description have thus been achieved.

## Claims

1. A method for cleaning a chocolate tempering machine (10), wherein said machine (10) comprises at least one tank (20) and a distribution spout (51) situated on the vertical line of said tank (20) and a worm-conveyor (40) for conveying a fluid material from said tank (20) to said spout (51), said method being **characterized in that** it comprises:
a first phase a) for injecting a mass of cocoa butter into said worm-conveyor (40) at a temperature higher than about 40°C, cooling said mass in said worm-conveyor (40) to a temperature lower than 21°C, maintaining the constant functioning of said worm-conveyor (40), said phase a) comprising the following steps: a1) melting said cocoa butter in said tank (20); a2) sending said cocoa butter into said worm-conveyor (40); a3) maintaining said internal cylindrical casing (42) at a temperature lower than 21°C and activating said worm screw (41) with the consequent progressive cooling of the mass of cocoa butter which is transiting in said worm-conveyor (40); and a4) contemporaneously maintaining said spout (51) at a temperature ranging from 35°C to 60°C; and a second phase b) for stopping said worm-conveyor (40) and heating the mass of cocoa butter contained therein to a temperature higher than 40°C, subsequently discharging it outside said worm-conveyor (40).

2. The method according to claim 1, **characterized in that** step a1) is effected by bringing said cocoa butter to a temperature ranging from 35°C to 60°C, preferably ranging from 45°C to 50°C.

3. The method according to one or more of the claims from 1 to 2, **characterized in that** said quantity of cocoa butter mass is preferably equal to the double of the volume of air present in the internal cylindrical casing (42) of the worm-conveyor (40), having subtracted the net of volume of said worm-conveyor (40).

4. The method according to one or more of the claims from 1 to 3, **characterized in that** said maintenance temperature of the internal cylindrical casing (42) of the worm-conveyor (40) of step a3), is substantially equal to or lower than 19°C.

5. The method according to one or more of the claims from 1 to 4, **characterized in that** said maintenance temperature of the spout (51) according to step a4) ranges from 40°C to 55°C.

## Patentansprüche

1. Verfahren zum Reinigen einer Schokoladentemperiermaschine (10), wobei die Maschine (10) zumindest einen Tank (20) und einen Verteilungsausguss (51), der auf der vertikalen Linie des Tanks (20) gelegen ist, und einen Schneckenförderer (40) zum Fördern eines Fluidmaterials aus dem Tank (20) zu dem Ausguss (51) umfasst, wobei das Verfahren **dadurch gekennzeichnet** ist, dass es umfasst:
eine erste Phase a) zum Einspritzen einer Masse an Kakaobutter in den Schneckenförderer (40) bei einer Temperatur, die höher als etwa 40 °C ist,
Kühlen der Masse in dem Schneckenförderer (40) auf eine Temperatur, die niedriger als 21 °C ist, Aufrechterhalten der konstanten Funktion des Schneckenförderers (40), wobei die Phase a) die folgenden Schritte umfasst:
a1) Schmelzen der Kakaobutter in dem Tank (20); a2) Schicken der Kakaobutter in den Schneckenförderer (40); a3) Halten des inneren zylindrischen Gehäuses (42) auf einer Temperatur, die niedriger als 21 °C ist, und Aktivieren der Schnecke (41) mit dem folgenden progressiven Kühlen der Masse an Kakaobutter, die durch den Schneckenförderer (40) hindurchgeht;
und a4) gleichzeitiges Halten des Ausgusses (51) auf einer Temperatur, die in einem Bereich von 35 °C bis 60 °C liegt; und eine zweite Phase b) zum Stoppen des Schneckenförderers (40) und Erwärmen der darin enthaltenen Masse an Kakaobutter auf eine Temperatur, die höher als 40 °C ist, wobei sie anschließend aus dem Schneckenförderer (40) ausgetragen wird.

2. Verfahren nach Anspruch 1, **dadurch gekennzeichnet, dass** Schritt a1) bewirkt wird, indem die Kakaobutter auf eine Temperatur gebracht wird, die in einem Bereich von 35 °C bis 60 °C, bevorzugt in einem Bereich von 45 °C bis 50 °C liegt.

3. Verfahren nach einem oder mehreren der Ansprüche 1 bis 2, **dadurch gekennzeichnet, dass** die Menge an Kakaobuttermasse bevorzugt gleich dem Doppelten des Luftvolumens ist, das in dem inneren zylindrischen Gehäuse (42) des Schneckenförderers (40) vorhanden ist, nachdem das Nettovolumen des Schneckenförderers (40) subtrahiert worden ist.

4. Verfahren nach einem oder mehreren der Ansprüche 1 bis 3, **dadurch gekennzeichnet, dass** die Haltetemperatur des inneren zylindrischen Gehäuses (42) des Schneckenförderers (40) von Schritt a3) im Wesentlichen gleich oder niedriger als 19 °C ist.

5. Verfahren nach einem oder mehreren der Ansprüche 1 bis 4, **dadurch gekennzeichnet, dass** die Haltetemperatur des Ausgusses (51) nach Schritt a4) in einem Bereich von 40 °C bis 55 °C liegt.

## Revendications

1. Procédé de nettoyage d'une machine à tempérer le chocolat (10), dans lequel ladite machine (10) comprend au moins un réservoir (20) et une buse de distribution (51) située sur l'axe vertical dudit réservoir (20) et un convoyeur à vis (40) pour transporter un matériau fluide dudit réservoir (20) à ladite buse (51), ledit procédé étant **caractérisé en ce qu'**il comprend :
une première phase a) pour injecter une masse de beurre de cacao dans ledit convoyeur à vis (40) à une température supérieure à 40 °C environ, refroidir ladite masse dans ledit convoyeur à vis (40) à une température inférieure à 21 °C, en maintenant le fonctionnement constant dudit convoyeur à vis (40), ladite phase a) comprenant les étapes suivantes : a1) faire fondre ledit beurre de cacao dans ledit réservoir (20) ; a2) envoyer ledit beurre de cacao dans ledit convoyeur à vis (40) ; a3) maintenir ladite enveloppe cylindrique intérieure (42) à une température inférieure à 21 °C et activer ladite vis sans fin (41) avec le refroidissement progressif consécutif de la masse de beurre de cacao qui transite dans ledit convoyeur à vis (40) ; et a4) maintenir simultanément ladite buse (51) à une température comprise entre 35 °C et 60 °C ; et une deuxième phase b) pour arrêter ledit convoyeur à vis (40) et chauffer la masse de beurre de cacao qui y est contenue à une température supérieure à 40 °C, et la décharger ensuite à l'extérieur dudit convoyeur à vis (40).

2. Procédé selon la revendication 1, **caractérisé en ce que** l'étape a1) est réalisée en amenant ledit beurre de cacao à une température comprise entre 35 °C et 60 °C, de préférence comprise entre 45 °C et 50 °C.

3. Procédé selon l'une ou plusieurs des revendications 1 à 2, **caractérisé en ce que** ladite quantité de masse de beurre de cacao est de préférence égale au double du volume d'air présent dans l'enveloppe cylindrique intérieure (42) du convoyeur à vis (40), après soustraction du reste de volume dudit convoyeur à vis (40).

4. Procédé selon l'une ou plusieurs des revendications 1 à 3, **caractérisé en ce que** ladite température de maintenance de l'enveloppe cylindrique intérieure (42) du convoyeur à vis (40) de l'étape a3 est sensiblement égale à 19 °C, ou moins.

5. Procédé selon l'une ou plusieurs des revendications 1 à 4, **caractérisé en ce que** ladite température de maintenance de la buse (51) selon l'étape a4) est comprise entre 40 °C et 55 °C.
